# EUROPEAN PATENT APPLICATION

(11) **EP 3 974 996 A1**
(43) Date of publication of application: **30.03.2022**
(21) Application number: 20901793.8
(22) Date of filing: 03.09.2020
(51) Int. Cl.: G06F 13/38

(54) **RENDERING METHOD, DISPLAYING METHOD, SERVER, TERMINAL AND COMPUTER-READABLE MEDIUM**

(30) Priority: 19.12.2019 CN 201911320479
(71) Applicant: ZTE Corporation, Shenzhen, Guangdong 518057 (CN)
(72) Inventor: ZHOU, Shijun, Shenzhen, Guangdong 518057 (CN); TU, Yaofeng, Shenzhen, Guangdong 518057 (CN); MEI, Junjun, Shenzhen, Guangdong 518057 (CN); HUANG, Zhenjiang, Shenzhen, Guangdong 518057 (CN); CHEN, Jun, Shenzhen, Guangdong 518057 (CN); ZHAO, Zhidong, Shenzhen, Guangdong 518057 (CN); MENG, Tianliang, Shenzhen, Guangdong 518057 (CN)
(74) Representative: Swindell & Pearson Limited
(86) International application number: PCT/CN2020/113164
(87) International publication number: WO 2021/120696

(57) **Abstract**

A rendering method, a displaying method, a server, a terminal and a computer-readable medium. The rendering method comprises: receiving rendering basis information from at least one terminal, wherein all terminals that provide rendering basis information constitute a source terminal set; carrying out rendering according to the rendering basis information to obtain a result video stream; and sending the result video stream to at least one target terminal, wherein for any target terminal, the source terminal set comprises at least one other terminal apart from the target terminal.

## Description

### CROSS-REFERENCE TO RELATED APPLICATION

This application is based on Chinese Patent Application No. 201911320479.6 filed on December 19, 2019, and claims priority to the Chinese patent application, the entire contents of which are incorporated herein by reference.

### TECHNICAL FIELD

The embodiments of the present disclosure relate to the technical field of video rendering, and more particularly, to a rendering method, a displaying method, a server, a terminal device and a computer-readable medium.

### BACKGROUND

In virtual reality (VR) displaying and augmented reality (AR) displaying, instead of being directly displayed, the existing videos (e.g., saved video files) should be rendered in real time according to the real-time conditions of the terminal device (e.g., the motion state of the VR helmet, the video stream collected by AR glasses, etc.) to obtain a video stream.

In order to improve the quality of VR displaying and AR displaying, the amount of calculation required during the rendering process has to be increased, which brings higher requirements for the performance and energy consumption of the terminal device.

### SUMMARY

Embodiments of the present disclosure provide a rendering method, a displaying method, a server, a terminal device and a computer-readable medium.

In a first aspect, an embodiment of the present disclosure provides a rendering method, applied to a server, including: receiving rendering basis information from at least one terminal device, all terminal devices that provide the rendering basis information forming a source terminal device set; performing a rendering operation according to the rendering basis information to obtain a result video stream; and transmitting the result video stream to at least one target terminal device, and for any target terminal device, the source terminal device set comprising at least one of the other terminal device except the target terminal device.

In a second aspect, an embodiment of the present disclosure provides a displaying method, applied to a terminal device, including: transmitting rendering basis information to a server; receiving a result video stream from the server, the result video stream being obtained by rendering by the server according to the rendering basis information transmitted by the terminal device and the rendering basis information transmitted by at least one other terminal device; and displaying the result video stream.

In a third aspect, an embodiment of the present disclosure provides a server, including: a first receiving unit configured to receive rendering basis information from at least one terminal device, all terminal devices that provide the rendering basis information forming a source terminal device set; a rendering unit configured to perform rendering according to the rendering basis information to obtain a result video stream; and a first transmitting unit configured to transmit the result video stream to at least one target terminal device, for any target terminal device, the source terminal device set including at least one other terminal device except the target terminal device.

In a fourth aspect, an embodiment of the present disclosure provides a terminal device, including: a second transmitting unit configured to transmit rendering basis information to a server; a second receiving unit configured to receive a result video stream from the server, the result video stream being obtained by rendering by the server according to the rendering basis information transmitted by the terminal device and the rendering basis information transmitted by at least one other terminal device; and a display unit configured to display the result video stream.

In a fifth aspect, an embodiment of the present disclosure provides a computer-readable medium having computer programs stored thereon which, when executed by a processor, cause the processor to perform the rendering method described above.

In a sixth aspect, an embodiment of the present disclosure provides a computer-readable medium having computer programs stored thereon which, when executed by a processor, cause the processor to perform the displaying method described above.

### BRIEF DESCRIPTION OF DRAWINGS

The accompanying drawings are provided for further understanding of the embodiments of the present disclosure and constitute a part of this specification. The accompanying drawings are used with the embodiments of the present disclosure to explain the present disclosure. The above and other features and advantages will become apparent to those having ordinary skill in the art by describing the embodiments in detail with reference to the accompanying drawings, in which:
FIG. 1 is a flowchart of a rendering method according to an embodiment of the present disclosure;
FIG. 2 is a flowchart of another rendering method according to an embodiment of the present disclosure;
FIG. 3 is a flowchart of a displaying method according to an embodiment of the present disclosure;
FIG. 4 is a flowchart of another displaying method according to an embodiment of the present disclosure;
FIG. 5 is a composition block diagram of a server according to an embodiment of the present disclosure;
FIG. 6 is a composition block diagram of a terminal device according to an embodiment of the present disclosure;
FIG. 7 is a composition block diagram of another terminal device according to an embodiment of the present disclosure;
FIG. 8 is a composition block diagram of a computer-readable medium according to an embodiment of the present disclosure;
FIG. 9 is a logic block diagram of a connection relationship between a server and a terminal device according to an embodiment of the present disclosure;
FIG. 10 is a logic block diagram of information interaction of an industrial design scenario according to an embodiment of the present disclosure;
FIG. 11 is a logic block diagram of information interaction of a teaching scenario according to an embodiment of the present disclosure; and
FIG. 12 is a logic block diagram of information interaction of a tourism scenario according to an embodiment of the present disclosure.

### DETAILED DESCRIPTION

In order to make those having ordinary skills in the art better understand the technical schemes in the embodiments of the present disclosure, the rendering method, the displaying method, the server, the terminal device and the computer-readable medium according to the embodiments of the present disclosure will be described in detail below with reference to the accompanying drawings.

The embodiments of the present disclosure will be described hereinafter with reference to the accompanying drawings, but the illustrated embodiments may be embodied in different forms and should not be interpreted as limiting the embodiments of the present disclosure. Rather, these embodiments are provided to make the present disclosure thorough and complete and make those having ordinary skill in the art understand the scope of the present disclosure.

The embodiments of the present disclosure may be described with reference to planar views and/or sectional views by means of the ideal schematic diagrams of the present disclosure. Therefore, the example illustrations may be modified according to manufacturing technologies and/or tolerances.

The embodiments of the present disclosure and the features in the embodiments may be combined with each other if not conflicted.

The terms used in the present disclosure are merely used for describing embodiments and not intended to limit the present disclosure. As used herein, the term "and/or" includes any and all combinations of one or more of related listed items. As used herein, singular forms "a/an" and "the" are also intended to include plural forms, unless otherwise clearly indicated in the context. As used herein, the terms "including/including" and "made of' specify the presence of the described features, integers, steps, operations, elements and/or components, but do not exclude the presence or addition of one or more of other features, integers, steps, operations, elements, components and/or groups thereof.

Unless otherwise defined, all terms (including technical and scientific terms) used herein have the same meanings as those commonly understood by a person of ordinary skill in the art. It should be further understood that, the terms such as those defined in commonly used dictionaries should be interpreted as having meanings consistent with their meanings in the context of the related technology and the present disclosure and should not be interpreted as having idealized or over-formalized meanings, unless otherwise clearly defined in the present disclosure.

The embodiments of the present disclosure are not limited to the embodiments shown in the accompanying drawings, and also include the modifications to configurations made on the basis of manufacturing processes. Therefore, the regions illustrated in the accompanying drawings have schematic attributes, and the shape examples of the regions illustrated in the accompanying drawings illustrate the shapes of the regions of elements and are not limiting.

According to the embodiments of the present disclosure, video streams are obtained through rendering by a server, and the rendered video streams are used by terminal devices for displaying and playback.

In an embodiment, the embodiments of the present disclosure can implement the real-time information interaction between different terminal devices in the form of video streams, and therefore can be used for "video conference", "audio/video conference" or the like.

The "server" refers to a device that has data processing capability and is different from terminal devices. The server can be in communicative connection (e.g., wireless communicative connection, more specifically 5G communicative connection) to a terminal device, and thus has the ability to interact information with the terminal device.

In an embodiment, as opposed to the terminal device, the server may be deployed in the "cloud", which may be a physical device or a "virtual machine (VM) " virtualized by a virtual device. The physical devices corresponding to the server may be distributed together (e.g., in a certain machine room), or may be connected through the cloud and distributed at different locations (e.g., in different cities).

"Rendering" refers to a process of processing the existing information (rendering basis information) to obtain a video stream that can be played by the terminal device, or a process of determining that "what content should be displayed by the terminal device" according to information.

The "rendering basis information" may include other video streams, but cannot be equivalent to the rendered video stream. That is, the "rendering" process may be a process of "generating a new video stream", not just a process of "forwarding the existing video stream".

The "video stream" refers to video data that is transmitted at a certain rate and can be displayed by the terminal device. Therefore, the video stream is temporal, and the video stream in each period of time corresponds to the content that should be displayed in a period of time (which may be the same as or different from the period of time of the video stream). Therefore, the video stream cannot be a complete video file (e.g., an RM file, an AVI file, etc.) stored locally.

The "terminal device" refers to a device that can play the video stream. In an embodiment, in the embodiments of the present disclosure, the terminal device can be used to implement 3D (three-dimensional) displaying, more specifically, VR displaying or AR displaying.

For example, the VR displaying means that a user cannot view the object in the real world but can view only the content displayed by the terminal device. The displayed content will change according to the user's state (e.g., motion state) so that the user feels as if he/she is in a "virtual word", and this virtual word will give feedback to the user's behavior. Correspondingly, the VR terminal device may include a VR helmet or the like.

For example, the AR displaying means that the displayed content viewed by a user is related to an object in the real word (e.g., the "description" of the object in the real world), so that the user can view more contents related to the object in the real world, which is equivalent to "enhancing the reality". Certainly, in the AR displaying, the user can view both the object in the real world and the content displayed by the terminal device; or the user can view only the content displayed by the terminal device, but the content includes the object in the real world displayed by the terminal device and the additional content. Correspondingly, the VR terminal device may include an AR glass or the like.

In a first aspect, an embodiment of the present disclosure provides a rendering method, applied to a server.

The method according to this embodiment of the present disclosure is applied in a server to render a video stream to be displayed on a terminal device.

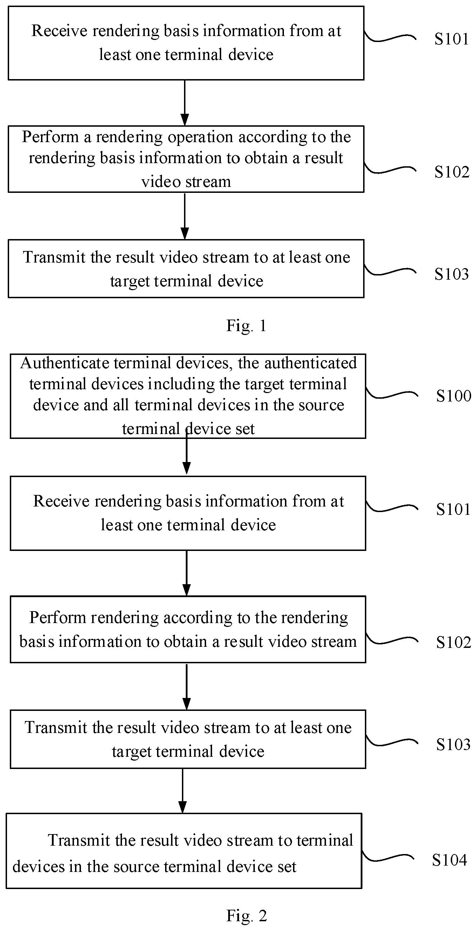

Referring to FIG. 1, the method according to this embodiment of the present disclosure includes the following.

In S101, rendering basis information from at least one terminal device is received.

All terminal devices that provide the rendering basis information form a source terminal device set.

The server receives (e.g., wirelessly) the information (rendering basis information) from terminal devices. All terminal devices that transmit rendering basis information form a set, i.e., a source terminal device set.

In some embodiments, the source terminal device set includes only one terminal device, that is, the server receives the rendering basis information from only one terminal device.

In some embodiments, the source terminal device set includes a plurality of terminal devices, that is, the server simultaneously receives the rendering basis information from a plurality of terminal devices. Certainly, the rendering basis information from different terminal devices is generally different.

The rendering basis information is the basis for the subsequent rendering process, that is, a video stream is obtained according to the rendering basis information.

In some embodiments, the rendering basis information includes at least one of the following: source video stream information, motion state information or control instruction information.

The rendering basis information may include video streams transmitted by the terminal device, i.e., source video stream information.

In an embodiment, the source video stream information may include information about the surrounding environment collected by the terminal device, for example, video streams collected by the camera of the terminal device.

Or, the source video stream information may include video streams generated in the terminal device. For example, when the terminal device runs some software (e.g., industrial design software), the result (e.g., design drawing) video stream generated by the software may be used as the source video stream information.

For example, when the rendering basis information includes the source video stream information, this embodiment of the present disclosure may be used for AR displaying.

The rendering basis information may include the parameters of the motion state on the terminal device side, i.e., motion state information.

In an embodiment, the motion state information may include the motion state of the terminal device or components thereof (e.g., VR glasses), or may include the motion state of the user who uses the terminal device or a part of the user's body (e.g., the user's head).

In an embodiment, the motion state may include the current location, posture (e.g., orientation, angle, etc.), motion direction (including rotation direction), motion velocity (including angular velocity), motion acceleration (including angular acceleration) of the target (e.g., a terminal device, a user, etc.), or any other information describing the "motion" parameter.

In an embodiment, the motion state may be collected by a motion sensor (e.g., an acceleration sensor, a gyroscope, etc.); or, the motion state may be obtained by collecting infrared, video or other information by other devices and then analyzing these information.

For example, when the rendering basis information includes the motion state information, this embodiment of the present disclosure may be used for VR displaying.

The rendering basis information may include a control instruction transmitted by the terminal device, i.e., control instruction information.

In an embodiment, the control instruction information refers to the command from the terminal device to control the content of the video stream, for example, to add a certain object to the video stream or change the state of a certain object, etc.

In an embodiment, the control instruction information may be calculated by the terminal device according to some methods, or may be input to the terminal device by the user in some ways, (e.g., through an input device such as a keyboard, a mouse or a touch screen).

For example, when the rendering basis information includes the control instruction information, this embodiment of the present disclosure may be used for VR displaying.

In S102, rendering is performed according to the rendering basis information to obtain a result video stream.

The server performs a rendering operation according to the rendering basis information from all terminal devices in the source terminal device set, to obtain a result video stream.

The result video stream may be a video stream for implementing 3D displaying, more specifically, a video stream for implementing AR displaying or VR displaying.

When the source terminal device set includes only one terminal device, the result video stream is obtained by rendering according to the rendering basis information from this terminal device.

When the source terminal device set includes a plurality of terminal devices, the result video stream is obtained by comprehensively rendering according to the rendering basis information from the plurality of terminal devices, or is a "fused" result of the rendering basis information from the plurality of terminal devices.

When the rendering basis information includes the source video stream information, "rendering" may be obtaining a result video stream according to the source video stream. For example, rendering may include identifying an object in the source video stream to obtain a result of identification and generating a video steam content corresponding to the result of identification, so that the video stream content may be used as a result video stream or the video stream content may be combined with the source video stream to obtain a result video stream.

When the rendering basis information includes the motion state information, "rendering" may be adjusting the content of the result video stream according to the motion state, i.e., obtaining a video stream of the content corresponding to the motion state. For example, when the user turns his/her head to the left, it is necessary for the user to "see" the object on the left of the current user's viewing location, that is, the object on the left of the current location should be obtained as a result video stream by rendering.

When the rendering basis information includes the control instruction information, "rendering" may be adjusting the result video stream according to the control instruction. For example, if the control instruction is to create a certain object, rendering should be adding the corresponding object in the video stream.

In S103, the result video stream is transmitted to at least one target terminal device.

For any target terminal device, the source terminal device set includes at least one other terminal device except the target terminal device.

The server transmits the result video stream to a desired terminal device (target terminal device); and for any target terminal device, the source terminal device set includes other terminal devices except this target terminal device. That is, the result video stream received by the target terminal device is not obtained by rendering only its own rendering basis information, but is also related to the rendering basis information of other terminal devices.

In some embodiments, the source terminal device set includes a plurality of terminal devices.

When the source terminal device set includes a plurality of terminal devices, the result video stream may be obtained by rendering the rendering basis information from the plurality of terminal devices. Thus, for any terminal device, the result video stream may not be obtained by rendering its own rendering basis information, so the result video stream may be transmitted to any terminal device. That is, the target terminal device may be a terminal device in the source terminal device set, or may be a terminal device that does not belong to the source terminal device set.

In some embodiments, the source terminal device set includes only one terminal device, and any target terminal device does not belong to the source terminal device set.

The source terminal device set may include only one terminal device, and the result video stream is obtained by rendering according to only the rendering basis information of the terminal device, so that this terminal device cannot be a target terminal device. Furthermore, the server can only use other terminal devices as target terminal devices. Or, in this case, one terminal device in the source terminal device set is an "information source" of the result video stream, and other terminal devices are equivalent to "receivers" of the result video stream.

In this embodiment of the present disclosure, the "rendering operation" of obtaining the result video stream to be displayed by the terminal device is performed in the server but not in the terminal device itself, so it is equivalent to "cloud rendering". Since the resources and operation capability of the server are generally much larger than those of the terminal device, according to this embodiment of the present disclosure, the efficiency and quality of rendering can be improved, the resources and energy consumption of the terminal device can be saved, and a better display effect can be achieved.

Meanwhile, with the development of the communication technology (e.g., with the popularization of 5G or higher-generation communication technology), the speed of information interaction between the terminal device and the server is greatly increased and enough to complete the transfer of related information in time, so that rendering in the server will not significantly affect the real-time displaying of the terminal device.

In addition, in this embodiment of the present disclosure, the result video stream received by each terminal device is not only obtained by rendering its own rendering basis information, but also obtained by the rendering basis information of other terminal devices. That is, the content displayed by each terminal device is related to the state of other terminal devices, and is equivalent to a result of "information interaction" with other terminal devices. Therefore, according to this embodiment of the present disclosure, the video interaction and information transfer between different terminal devices (or different users) are actually implemented, so it is equivalent to implement "video conference", "video/audio conference" or the like.

Referring to FIG. 2, in some embodiments, before receiving rendering basis information from at least one terminal device (S 102), the method further includes the following.

In S100, terminal devices are authenticated, the authenticated terminal devices including the target terminal device and all terminal devices in the source terminal device set.

From the perspective of the server, before receiving the rendering basis information from terminal devices, the server may authenticate (or negotiate or register) terminal devices in advance to determine which terminal devices will participate in the subsequent process (e.g., interaction process).

There are a variety of authentication ways, which may include multiple information interactions with terminal devices. For example, it may be determined which terminal devices can be authenticated successfully by authenticating the identifiers, access passwords or the like transmitted by terminal devices; or, a plurality of other terminal devices may be selectively authenticated according to an instruction from a certain terminal device, which will not be described in detail here.

Referring to FIG. 2, in some embodiments, when the source terminal device set includes only one terminal device and any target terminal device does not belong to the source terminal device set, after performing a rendering operation according to the rendering basis information to obtain a result video stream (S 102), the method further includes the following.

In S104, the result video stream is transmitted to terminal devices in the source terminal device set.

When the source terminal device set includes only one terminal device, the result video stream obtained by rendering according to the rendering basis information of this terminal device may be transmitted to this terminal device for displaying by this terminal device itself.

However, it should be understood that, in this case, the terminal devices in the source terminal device set are used as other transmitting targets of the result video stream, rather than "target terminal devices".

In a second aspect, an embodiment of the present disclosure provides a displaying method, applied to a terminal device.

The method according to this embodiment of the present disclosure is, applied to a terminal device to acquire a result video stream rendered by a server to implement displaying.

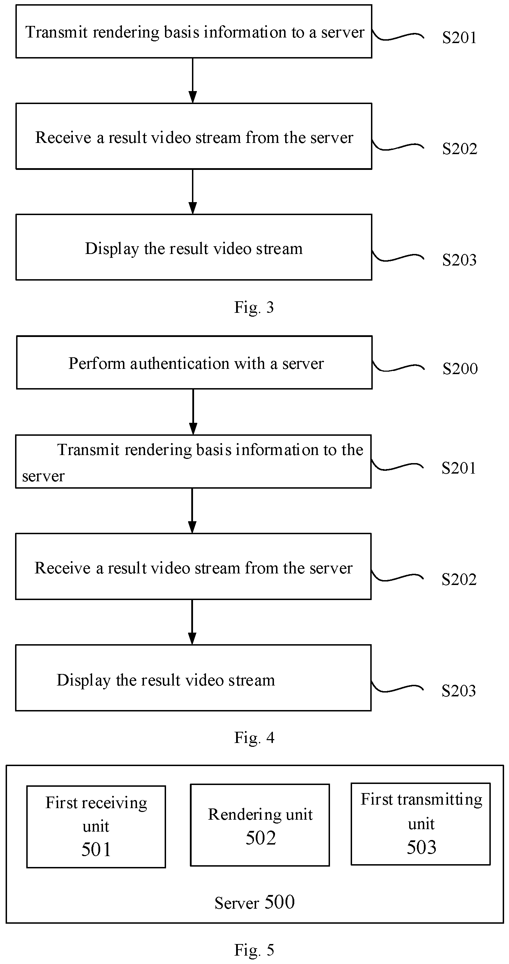

Referring to FIG. 3, the method according to this embodiment of the present disclosure includes the following.

In S201, rendering basis information is transmitted to a server.

The terminal device transmits (e.g., wirelessly) its own rendering basis information to the server for processing by the server.

In S202, a result video stream from the server is received.

The result video stream is obtained by rendering by the server according to the rendering basis information transmitted by the terminal device and rendering basis information transmitted by other terminal devices.

The terminal device receives the result video stream rendered by the server. As described above, in addition to the rendering basis information transmitted by the terminal device itself, the rendering basis information used for rendering to obtain the result video stream further includes the rendering basis information transmitted by at least one other terminal device.

In S203, the result video stream is displayed.

The terminal device continuously displays the received result video stream for users to view.

The displaying may be 3D displaying, more specifically, AR displaying or VR displaying.

According to this embodiment of the present disclosure, the content displayed by the terminal device is rendered (cloud rendered) on the server side, so the resource occupation and energy consumption of the terminal device are low, the display effect is good, and it is easy to implement.

Meanwhile, the content displayed by the terminal device is also related to the state of other terminal devices, so this embodiment of the present disclosure equivalently implements the "information interaction" between different terminal devices (or different users) and may be used to implement "video conference", "video/audio conference" or the like.

In some embodiments, before transmitting rendering basis information to a server (S101), the method further includes at least one of the following:
acquiring source video stream information, the rendering basis information including the source video stream information;
acquiring motion state information, the rendering basis information including the motion state information; or
acquiring control instruction information, the rendering basis information including the control instruction information.

Before transmitting the rendering basis information to the server, the terminal device may acquire the above various rendering basis information in various ways, for example, collecting a source video stream by a camera, acquiring the motion state by a motion sensor, receiving a control instruction from a user by an input terminal device or the like.

In some embodiments, referring to FIG. 4, before transmitting rendering basis information to a server, the method further includes the following.

In S200, authentication is performed with the server.

That is, the terminal device may first authenticate an access server and then start to perform the subsequent operations of the method according to this embodiment of the present disclosure.

Certainly, it should be understood that the authentication process may include multiple information interactions with the server, which will not be described in detail here.

In a third aspect, referring to FIG. 5, an embodiment of the present disclosure provides a server 500. The server includes:
a first receiving unit 501 configured to receive rendering basis information from at least one terminal device, all terminal devices that provide the rendering basis information forming a source terminal device set;
a rendering unit 502 configured to perform rendering according to the rendering basis information to obtain a result video stream; and
a first transmitting unit 503 configured to transmit the result video stream to at least one target terminal device, for any target terminal device, the source terminal device set including at least one other terminal device except the target terminal device.

The server according to this embodiment of the present disclosure can implement the rendering method described above, so the server includes a rendering unit for rendering and further includes a unit (e.g., a wireless unit) for transmitting and receiving information to implement the information interaction with a terminal device.

Certainly, the server according to this embodiment of the present disclosure may be deployed on the cloud, which may be a physical device, or a set of a plurality of physical devices, or a virtual machine (VM) virtualized by a virtual device.

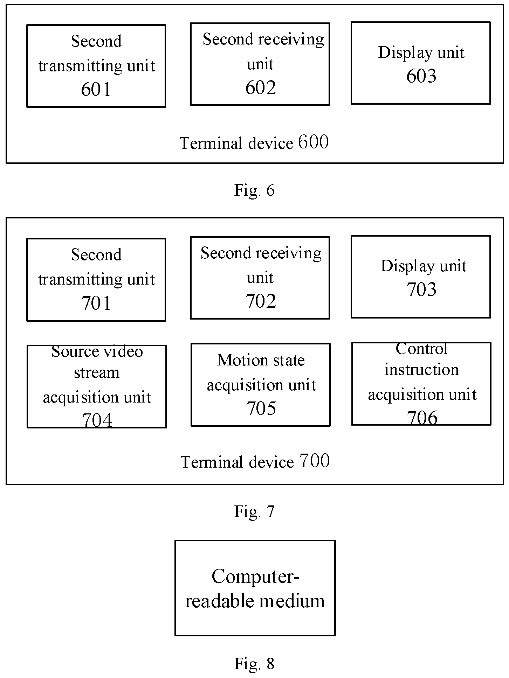

In a fourth aspect, referring to FIG. 6, an embodiment of the present disclosure provides a terminal device 600. The terminal device includes:
a second transmitting unit 601 configured to transmit rendering basis information to a server;
a second receiving unit 602 configured to receive a result video stream from the server, the result video stream being obtained by rendering by the server according to the rendering basis information transmitted by the terminal device and the rendering basis information transmitted by at least one other terminal device; and
a display unit 603 configured to display the result video stream.

The terminal device 600 according to this embodiment of the present disclosure can implement the displaying method described above, so the terminal device 600 includes a display unit 603 (e.g., a display) for displaying and further includes a unit (e.g., a wireless unit) for transmitting and receiving information to implement the information interaction with a server.

Referring to FIG. 7, in some embodiments, in addition to the second transmitting unit 701, the second receiving unit 907 and the display unit 703, the terminal device 700 may further include at least one of the following:
a source video stream acquisition unit 704 configured to acquire source video stream information, the rendering basis information including the source video stream information;
a motion state acquisition unit 705 configured to acquire motion state information, the rendering basis information including the motion state information; or
a control instruction acquisition unit 706 configured to acquire control instruction information, the rendering basis information including the control instruction information.

The terminal device 700 may have a corresponding acquisition unit (e.g., a camera, a motion sensor, an input device, etc.) to acquire a corresponding type of information as the rendering basis information.

In some embodiments, the display unit 703 is a 3D display unit.

The display unit 703 may be configured to implement 3D displaying, more specifically, AR displaying (for example, the display unit may include a pair of AR glasses) or VR displaying (for example, the display unit may include a VR helmet).

Certainly, it should be understood that the terminal device may be deployed on the "user side". Although the terminal device is a terminal device in function, it may be composed of a plurality of separate physical devices.

In a fifth aspect, referring to FIG. 8, an embodiment of the present disclosure provides a computer-readable medium having computer programs stored thereon which, when executed by a processor, cause the processor to perform the rendering method described above.

In a sixth aspect, referring to FIG. 8, an embodiment of the present disclosure provides a computer-readable medium having computer programs stored thereon which, when executed by a processor, cause the processor to perform the displaying method described above.

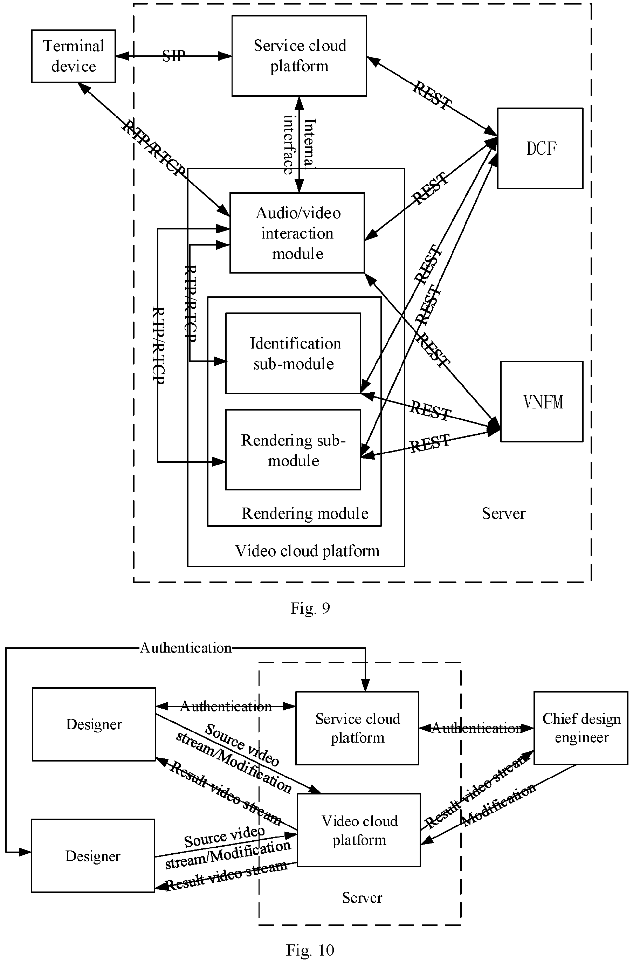

In some embodiments, referring to FIG. 9, the server according to the embodiment of the present disclosure may be divided into different modules, and these modules may be different physical devices or virtual modules obtained by virtualization.

In an embodiment, the server may include a service cloud platform and a video cloud platform.

The service cloud platform is configured to implement the logic control of processes in the embodiment of the present disclosure. The logic control mainly includes authentication of terminal devices, management (e.g., addition, type alteration, cancellation, etc.) of terminal devices that have been accessed (authenticated), internal communication with the video cloud platform, or the like.

The video cloud platform may further include an audio/video interaction module and a rendering module.

The audio/video interaction module is configured to implement the information interaction between accessed terminal devices. The information interaction may include: parsing a request (rendering basis information) transmitted by an accessed terminal device, allocating the request to a corresponding rendering module, and transmitting the result of rendering to a desired target terminal device.

The rendering module is configured to perform rendering according to the rendering basis information to obtain a result video stream, and transmit the result video stream to the audio/video interaction module. The rendering module may include:
an identification sub-module which can load an identification module, and is configured to decode a source video stream when the rendering basis information includes the source video stream, identify the result of decoding through the identification module, and transmit the result of identification to a rendering sub-module; and
a rendering sub-module which is configured to perform rendering to obtain a result video stream. In an embodiment, when the rendering basis information includes a source video stream, the rendering sub-module may render the result of identification to obtain a result video stream or may fuse the result of identification with the source video stream to obtain a result video stream.

Or, the rendering sub-module may also be configured to perform rendering according to the motion state, control instruction or the like to obtain a result video stream.

Certainly, if "identification" is not required, the rendering module may directly perform the operation of the rendering sub-module, that is, it is unnecessary to divide the rendering module into the identification sub-module and the rendering sub-module.

The service cloud platform may communicate with (authenticate) terminal devices through a Session Initiation Protocol (SIP).

The audio/video interaction module may communicate with the service cloud platform through an internal interface, and may communicate with terminal devices through a Real-time Transport Protocol (RTP)/Real-time Transport Control Protocol (RTCP).

The rendering module (the identification sub-module and the rendering sub-module) may also communicate with the audio/video interaction module through a RTP/RTCP.

The modules in the service may implement service registration, service discovery function or the like through a Distribute Communication Framework (DCF).

The modules in the server may communicate with the DCF through a Representational State Transfer (REST) interface.

The resource management of each virtual module (the audio/video interaction module or the rendering module) of the video cloud platform may be implemented by a Network Virtual Functional Management (NVFM). In an embodiment, each virtual module may regularly report local resources to the NVFM, and the NVFM statistically analyzes the resources of each virtual module and decides to expand or shrink the resources of the corresponding virtual module according to the result of statistical analysis.

Each virtual module may communicate with the NVFM through a REST interface.

Since different virtual modules have different requirements for the storage space, memory, CPU capability, GPU capability or the like, the corresponding resources are allocated to the virtual modules as required, and the virtual modules are deployed on the corresponding hardware.

The audio/video interaction module may allocate the request according to different allocation strategies.

For example, the allocation strategy may be a load sharing strategy. That is, the audio/video interaction module may allocate the request to a module (e.g., a virtual machine or a physical machine) having the lowest resource occupation currently, so that the resource occupation of each module is relatively balanced.

For example, the allocation strategy may also be a load centralization strategy. That is, the audio/video module sets an upper limit of resource occupation for each module (a virtual module or a physical device). As long as this upper limit is not exceeded, the request may be allocated to a module having the highest resource occupation currently. For example, the upper limit of the CPU occupation may be set to be 80%. If the CPU occupations of two modules in the server (cluster) are 70% and 50%, respectively, the new request should be allocated to the module having 70% CPU occupation for processing; and if the CPU occupations of the two modules is 50% and 85%, respectively, the new request should be allocated to the module having 50% CPU occupation for processing.

For example, the allocation strategy may further include a territorial proximity strategy. If it is assumed that two terminal devices A and B are located in two different cities C and D, respectively, when the two terminal devices A and B will interact with each other, the information from the terminal device A may be allocated to the corresponding module of the physical device located in the city C, and the information from the terminal device B is allocated to the corresponding module of the physical device located in the city D, thereby reducing the delay caused by signal transfer and improving the user experience.

As an application, referring to FIG. 10, the embodiments of the present disclosure may be applied in an industrial design scenario.

In the industrial design scenario, participants include two roles, i.e., chief design engineer and designer; and each participant has his/her own terminal device. The process of the industrial design scenario may include the following.

At operation one, designers and a chief design engineer use their respective terminal devices to authenticate (or negotiate and register) with the service cloud platform of the server, and the audio/video interaction module of the video cloud platform of the server creates an audio/video conference including determining participants (terminal devices).

At operation two, a plurality of designers use their respective terminal devices to transmit, to the video cloud platform, respective source video streams (e.g., real-time pictures of respective design drawings) as rendering basis information; the video cloud platform performs rendering to fuse a plurality of source video streams to obtain a result video stream; and the audio/video interaction module transmits the result video stream to all terminal devices, so that all designers and the chief design engineer may view a virtual scenario where the plurality of design drawings are overlapped.

At operation three, if necessary, the designers and the chief design engineer may modify the viewed design drawings through their respective terminal devices, for example, add annotations or add parts, and transmit, to the video cloud platform, the modifications as rendering basis information, so that the video cloud platform performs rendering to obtain a result video stream including the modifications such as annotations and new parts for persons to view.

At operation four, if the chief design engineer finds there is something wrong with a designer's design drawing, the chief design engineer may make an audio call with this designer through his/her own terminal device to explain the problem.

Similarly, if a designer needs to ask any question to the chief design engineer, this designer may make an audio call with the chief design engineer through his/her own terminal device to ask questions.

In this scenario, a plurality of designers may combine or modify industrial designs in a virtual scenario, and the chief design engineer may view the design drawings of the designers in real time and give guidance and intervention in real time.

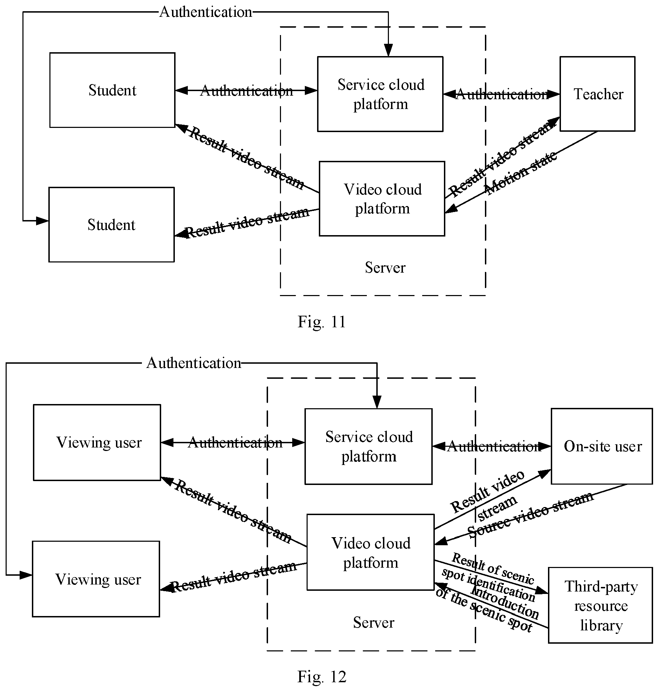

As an application, referring to FIG. 11, the embodiments of the present disclosure may be applied in a teaching scenario.

In the teaching scenario, participants include two roles, i.e., teacher and student, and each participant has his/her respective terminal device. The process of the teaching scenario may include the following.

At operation one, a teacher and students use their respective terminal devices to authenticate (or negotiate and register) with the service cloud platform of the server, and the audio/video interaction module of the video cloud platform of the server creates an audio/video conference including determining participants (terminal devices).

At operation two, the teacher starts to give a lecture, the motion state of the teacher is transmitted to the audio/video interaction module of the video cloud platform through the terminal device of the teacher to serve as rendering basis information, and the audio/video interaction module forwards control information to the rendering module.

At operation three, the rendering module performs rendering according to the rendering basis information to obtain a result video stream including a virtual scenario, i.e., a video stream including the lecture content of the teacher.

At operation four, the audio/video interaction module issues the result video stream to all terminal devices, so that the students can view the teacher's lecture and the teacher can also view whether his/her own state is normal.

In this scenario, the teacher can transmit the content video stream of the lecture to a plurality of students in real time, and can monitor the content video stream in real time.

As an application, referring to FIG. 12, the embodiments of the present disclosure may be applied in a tourism scenario.

In the tourism scenario, participants include two roles, i.e., on-site user and viewing user, and each participant has his/her respective terminal device. The process of the tourism scenario may include the following operations 1 to 5.

At operation one, an on-site user and viewing users use their respective terminal devices to authenticate (or negotiate and register) with the service cloud platform of the server, and the audio/video interaction module of the video cloud platform of the server creates an audio/video conference including determining participants (terminal devices).

At operation two, in the tourism process, the on-site users collect source video streams of real objects in a scenic spot by the source video stream acquisition units (cameras) of the terminal devices and transmit the source video streams to the audio/video interaction module of the video cloud platform to serve as rendering basis information, and audio/video interaction module forwards the source video streams to the rendering module.

At operation three, the identification sub-module of the rendering module identifies the scenic spot (i.e., which scenic spot at which location in the source video stream) according to the source video streams, and transmits the result to the audio/video interaction module.

At operation four, the audio/video interaction module searches the information about this scenic spot (e.g., the introduction of this scenic spot) from a third-party resource library, and transmits the information to the rendering sub-module, so that the rendering sub-module performs rendering to obtain a result video stream.

At operation five, the audio/video interaction module transmits the result video stream to all terminal devices, so that all users view the video stream and introduction of this scenic spot.

In this scenario, a viewing user in the scenic spot can transmit the video stream of this scenic spot to a plurality of viewing users, and can add the introduction of this scenic spot in the video stream.

In the embodiments of the present disclosure, the "rendering operation" of obtaining the result video stream to be displayed by the terminal device is performed in the server but not in the terminal device itself, so it is equivalent to "cloud rendering". Since the resources and operation capability of the server are generally much larger than those of the terminal device, according to the embodiments of the present disclosure, the efficiency and quality of rendering can be improved, the resources and energy consumption of the terminal device can be saved, and a better display effect can be achieved.

Meanwhile, with the development of the communication technology (e.g., with the popularization of 5G or higher-generation communication technology), the speed of information interaction between the terminal device and the server is greatly increased and enough to complete the transfer of related information in time, so that rendering in the server will not significantly affect the real-time displaying of the terminal device.

In addition, in this embodiment of the present disclosure, the result video stream received by each terminal device is not only obtained by rendering its own rendering basis information, but also obtained by the rendering basis information of other terminal devices. That is, the content displayed by each terminal device is related to the state of other terminal devices, and is equivalent to a result of "information interaction" with other terminal devices. Therefore, according to this embodiment of the present disclosure, the video interaction and information transfer between different terminal devices (or different users) are actually implemented, so it is equivalent to implement "video conference", "video/audio conference" or the like.

It should be understood by a person of ordinary skill in the art that, all or some of the functional modules/units in the steps, systems and devices disclosed above may be implemented as software, firmware, hardware and suitable combinations thereof.

In the hardware implementation, the division of the functional modules/units mentioned above does not necessarily correspond to the division of physical components. For example, one physical component may have multiple functions, or one function or operation may be cooperatively executed by a number of physical components.

Some or all of the physical components may be implemented as software executed by a processor such as central processing unit (CPU), digital signal processor or microprocessor, or implemented as hardware, or implemented as an integrated circuit such as application-specific integrated circuit. Such software may be distributed on a computer-readable medium, and the computer-readable medium may include a computer storage medium (or non-temporary medium) and a communication medium (or temporary medium). As well-known to a person of ordinary skill in the art, the term "computer storage medium" includes a volatile or non-volatile and removable or non-removable medium implemented in any method or technology used for storing information (such as computer-readable instruction, data structure, program module or other data). The computer storage medium includes, but not limited to, RAM (more In an embodiment, for example, SDRAM, DDR, etc.), ROM, EEPROM, flash memory or other memory technologies, CD-ROM, digital video disk (DVD) or other optical disk storage, magnetic cassette, magnetic tape, magnetic disk storage or other magnetic storage devices, or any other mediums which can be used to store desired information and can be accessed by a computer. In addition, as well-known to a person of ordinary skill in the art, the communication medium generally contains a computer-readable instruction, a data structure, a program module or other data in modulation data signal such as carrier or other transmission mechanism, and may include any information transfer medium.

Some embodiments have been described in the present disclosure. In addition, although specific terms are used, these terms are only used and only interpreted in a general explanatory sense and are not limiting. In some instances, it is apparent for those having ordinary skill in the art that, unless otherwise clearly specified, the features, characteristics and/or elements described in conjunction with an embodiment may be used alone or may be combined with the features, characteristics and/or elements described in conjunction with other embodiments. Therefore, it should be understood by those having ordinary skill in the art that the changes in various forms and details may be made without departing from the scope of the present disclosure as set forth in the appended claims.

## Claims

1. A rendering method, applied to a server, comprising:
receiving rendering basis information from at least one terminal device, wherein all terminal devices that provide the rendering basis information forms a source terminal device set;
performing a rendering operation according to the rendering basis information to obtain a result video stream; and
transmitting the result video stream to at least one target terminal device, and for any target terminal device, the source terminal device set comprising at least one of the other terminal device except the target terminal device.

2. The rendering method of claim 1, wherein the rendering basis information comprises at least one of the following:
source video stream information;
motion state information; or
control instruction information.

3. The rendering method of claim 1, wherein,
the source terminal device set comprises a plurality of terminal devices.

4. The rendering method of claim 1, wherein,
the source terminal device set comprises only one terminal device; and
any target terminal device does not belong to the source terminal device set.

5. The rendering method of claim 4, wherein after performing a rendering operation according to the rendering basis information to obtain a result video stream, the method further comprises:
transmitting the result video stream to terminal devices in the source terminal device set.

6. The rendering method of claim 1, wherein prior to receiving rendering basis information from at least one terminal device, the method further comprises:
authenticating terminal devices, wherein the authenticated terminal devices comprise the target terminal device and all the terminal devices in the source terminal device set.

7. A displaying method, applied to a terminal device, comprising:
transmitting rendering basis information to a server;
receiving a result video stream from the server, wherein the result video stream is obtained by rendering by the server according to the rendering basis information transmitted by the terminal device and rendering basis information transmitted by other terminal devices; and
displaying the result video stream.

8. The displaying method of claim 7, wherein prior to transmitting rendering basis information to a server, the method further comprises at least one of the following:
acquiring source video stream information, wherein the rendering basis information comprises the source video stream information;
acquiring motion state information, wherein the rendering basis information comprises the motion state information; or
acquiring control instruction information, wherein the rendering basis information comprises the control instruction information.

9. The displaying method of claim 7, prior to transmitting rendering basis information to a server, the method further comprises:
performing authentication with the server.

10. A server, comprising:
a first receiving unit configured to receive rendering basis information from at least one terminal device, wherein all terminal devices that provide the rendering basis information forms a source terminal device set;
a rendering unit configured to perform rendering according to the rendering basis information to obtain a result video stream; and
a first transmitting unit configured to transmit the result video stream to at least one target terminal device, wherein for any target terminal device, the source terminal device set comprises at last one other terminal device except the target terminal device.

11. A terminal device, comprising:
a second transmitting unit configured to transmit rendering basis information to a server;
a second receiving unit configured to receive a result video stream from the server, wherein the result video stream is obtained by rendering by the server according to the rendering basis information transmitted by the terminal device and rendering basis information transmitted by other terminal devices; and
a display unit configured to display the result video stream.

12. The terminal device of claim 11, further comprising at least one of the following:
a source video stream acquisition unit configured to acquire source video stream information, wherein the rendering basis information comprises the source video stream information;
a motion state acquisition unit configured to acquire motion state information, wherein the rendering basis information comprises the motion state information; or
a control instruction acquisition unit configured to acquire control instruction information, wherein the rendering basis information comprises the control instruction information.

13. The terminal device of claim 11, wherein
the display unit is a 3D display unit.

14. A computer-readable medium having computer programs stored thereon which, when executed by a processor, cause the processor to perform the rendering method of any one of claims 1 to 6.

15. A computer-readable medium having computer programs stored thereon which, when executed by a processor, cause the processor to perform the displaying method of any one of claims 7 to 9.
